# EUROPÄISCHE PATENTANMELDUNG

(11) **EP 1 036 735 A2**
(43) Veröffentlichungstag der Anmeldung: **20.09.2000**
(21) Anmeldenummer: 00103848.8
(22) Anmeldetag: 24.02.2000
(51) Int. Cl.: B64G 1/64

(54) **Ausstossmechanismus für Satelliten**

(30) Priorität: 17.03.1999 DE 19911857
(71) Anmelder: DaimlerChrysler Aerospace AG, 85521 Ottobrunn (DE)
(72) Erfinder: Schepelmann, Jürgen, Dipl.-Ing., 28199 Bremen (DE)
(74) Vertreter: Hansmann, Dierk, Dipl.-Ing.

(57) **Zusammenfassung**

Ein federbetriebener Ausstoßmechanismus für Satelliten besteht aus je einer Zug- und Druckfeder (12,18), die miteinander kombiniert und über eine nichtselbsthemmende Spindel (19) variabel vorspannbar sind. Die Vorspannung wird über einen mit einem Untersetzungsgetriebe versehenen Elektromotor (30) erzeugt. Alle gleitenden Komponenten sind bezüglich ihrer Umfangs- und Längsbewegungen in Wälzlagern geführt, und dem Elektromotor sind schaltbare Kupplungen (32,34) sowie eine Scheibenbremse (33) zur Einstellung der Richtung der Ausstoßkraft zugeordnet.

## Beschreibung

Die Erfindung betrifft einen federbetriebenen Ausstoßmechanismus für Satelliten.

Mechanismen für das Aussetzen von Satelliten im Weltraum sind bereits bekannt und sind unter anderem in dem Artikel "Can tether be commercialized ?" von D. F. Robertson in der Zeitschrift SPACE MARKETS 5, 1990, Seiten 259 bis 261, beschrieben. Die meisten der bekannten Mechanismen arbeiten entweder mit einem Druckfedersystem, einem Kaltgastriebwerk oder aber mit einem Katapultsystem und erzeugen eine nach Größe und Richtung konstante Ausstoßkraft. So ist aus der DE 42 43 562 C2 ein Mechanismus der eingangs genannten Art für das Aussetzen von Nutzlasten aus dem Innenraum eines Raumtransportfahrzeuges bekannt geworden, mit dem ein gleichzeitiger Ausstoß mehrerer Satelliten möglich ist. Dadurch, daß bei dieser bekannten Vorrichtung zusätzlich zu einer die Beschleunigung liefernden Feder zumindest einigen Satelliten jeweils eine aus einem Hubzylinder und einer Kolbenstange bestehende individuelle Hubeinrichtung zugeordnet ist, können diese beim Aussetzen in unterschiedliche Richtungen in Bezug auf den Raumtransporter bewegt werden. Ein federbetriebener Ausstoßmechanismus ist darüber hinaus auch aus der DE 694 01 851 T2 bekannt geworden.

Neben dem Aussetzen von Satelliten aus einem Raumtransporter heraus wächst die Zahl der Anwendungsfälle, in denen Nutzlastkapseln von sogenannten Sub-Satelliten ausgesetzt werden sollen.

Die Nutzlastkapseln bewegen sich dann auf einer Abstiegsbahn in Richtung Erdoberfläche wo sie, je nach dem Zweck der Mission, entweder in der Lufthülle verglühen oder gezielt landen, um anschließend geborgen zu werden. Der Sub-Satellit hängt dabei seinerseits an einem langen Seil, das diesen mit der Weitraumstation verbindet.

Aufgabe der Erfindung ist es, eine Vorrichtung der eingangs genannten Art so auszubilden, daß es möglich ist, mit einer möglichst einfachen und leichten Anordnung die Ausstoßrichtung der Nutzlast zu verändern und dadurch insbesondere bei seilgekoppelten Satelliten flexible Aussetzbedingungen zu realisieren. Insbesondere soll die Rückwirkung auf den aussetzenden Satelliten möglichst gering gehalten werden.

Die Erfindung löst diese Aufgabe, indem sie vorsieht, daß bei einer derartigen Vorrichtung eine Zug- und eine Druckfeder miteinander kombiniert und über eine nichtselbsthemmende Spindel variabel vorgespannt sind und daß die Vorspannung der Federn über einen mit einem Untersetzungsgetriebe versehenen Elektromotor einstellbar ist.

Nach Erreichen der gewünschten Vorspannkraft werden die erfindungsgemäß vorgesehenen Federn entspannt und die Nutzmasse wird in Erdrichtung aus dem Trägerflugkörper hinausgeschleudert. Die Ausstoßrichtung kann in weiten Bereichen sowohl über den Azimut- als auch über den Elevationswinkel eingestellt werden. Diese Einstellungen werden gemäß der Erfindung durch einen stark ins Langsame übersetzten Elektromotor vorgenommen, bei dem es sich vorzugsweise um ein in der Robotertechnik verwendetes sogenanntes Harmonic-Drive-Getriebe handelt.

In weiterer Ausgestaltung der Erfindung ist vorgesehen, daß alle gleitenden Teile bezüglich der Umfangs- und der Längebewegungen in Wälzlagern geführt sind, um etwaige Reibungs- und Verkantungseffekte zu eliminieren bzw. möglichst gering zu halten.

Der erfindungsgemäße Ausstoßmechanismus besitzt den Vorteil einer flexiblen Einsatzmöglichkeit, da die Richtung der Ausstoßkraft nahezu beliebig variierbar ist. Er ist damit speziell geeignet für die Rückführung, die sogenannte De-Orbitation, einer Nutzmasse, beispielsweise einer Kapsel, zur Erdoberfläche, ausgehend vom Sub-Satelliten eines seilgekoppelten Satellitensystems, wobei der Haupt-Satellit insbesondere die geplante internationale Raumstation ISS sein kann. Die Abstiegsbahn wird dabei wesentlich beeinflußt von dem zum Ausstoßzeitpunkt wirkenden Vektor der Ausstoßkraft, der bei der Vorrichtung nach der Erfindung leicht einstellbar ist. Der Ausstoßmechanismus nach der Erfindung kann aber ebenso vorteilhaft auch für das Aussetzen eines frei fliegenden Satelliten oder einer Nutzlastkapsel verwendet werden. Als ausstoßendes Fahrzeug ist auch in diesem Fall die geplante Raumstation ISS geeignet. Der Ausstoß kann dabei sowohl in Richtung Zenit, also "nach oben", als auch in Richtung Nadir, d.h. "nach unten" oder erdwärts gerichtet, erfolgen.

Besonders vorteilhaft ist die Möglichkeit, einen Vortest für den Ausstoßvorgang vorzunehmen. Wahlweise kann vor dem eigentlichen Ausstoßvorgang das Federpaket entspannt werden, so daß die Nutzlastkapsel in Ruhe bleibt, und es kann die von Reibungseinflüssen abhängige Gängigkeit des Systems kontrolliert werden. Damit sind auf einfache Weise Korrekturmaßnahmen hinsichtlich Ausstoßgeschwindigkeit und -richtung möglich.

Nach dem Ausstoßen eines Satelliten oder einer Kapsel schwingt das System weiter. Es kann aber auf einfache Weise derartig abgestoppt werden, daß etwaige Rückwirkungen auf den Sub-Satelliten klein bleiben. Da nur die Nutzlast ausgestoßen wird und insgesamt nur wenige Teile verloren gehen, ist zugleich eine rasche Wiederverwendbarkeit der erfindungsgemäßen Vorrichtung, ohne umfangreiche Montagearbeiten, gewährleistet.

Nachfolgend soll die Erfindung anhand von in der Zeichnung dargestellten Ausführungsbeispielen näher erläutert werden. Es zeigen
- Fig. 1: eine Prinzipdarstellung des Aufbaus einer Ausstoßvorrichtung für Satelliten,
- Fig. 2: eine geschnittene Übersichtdarstellung der Anordnung gemäß Fig. 1,
- Fig. 3 bis 7: Detaildarstellungen einzelner Komponenten der Anordnung gemäß den Figuren 1 und 2 jeweils in geschnittener Darstellung und
- Fig. 8 bis 11: Prinzipdarstellungen der Wirkungsweise der in den Figuren 1 bis 7 dargestellten Anordnung mit Darstellung von Störeinflüssen bei der Winkeleinstellung.

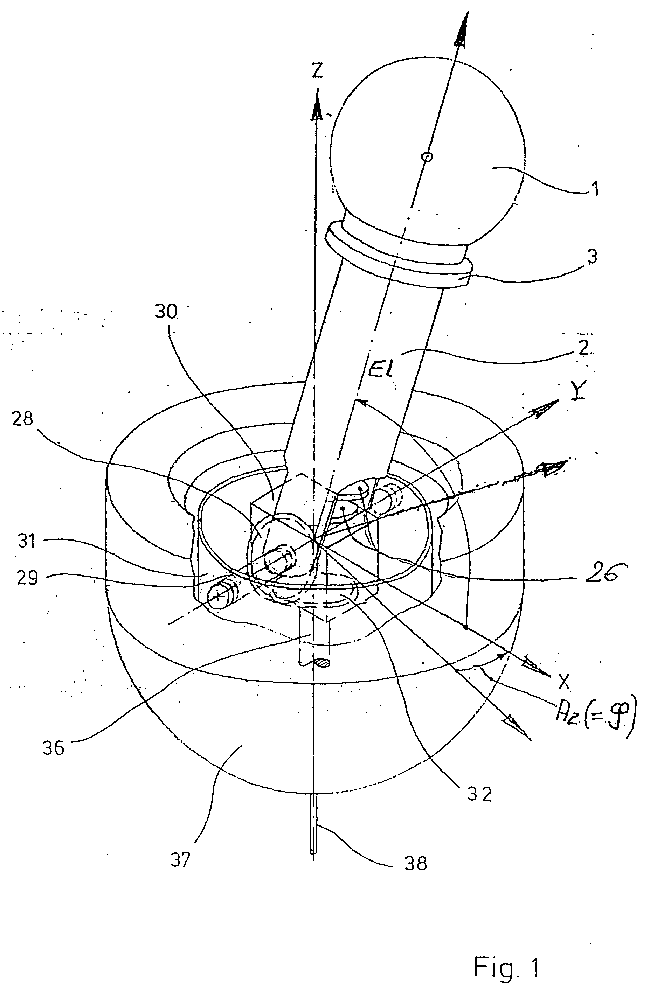

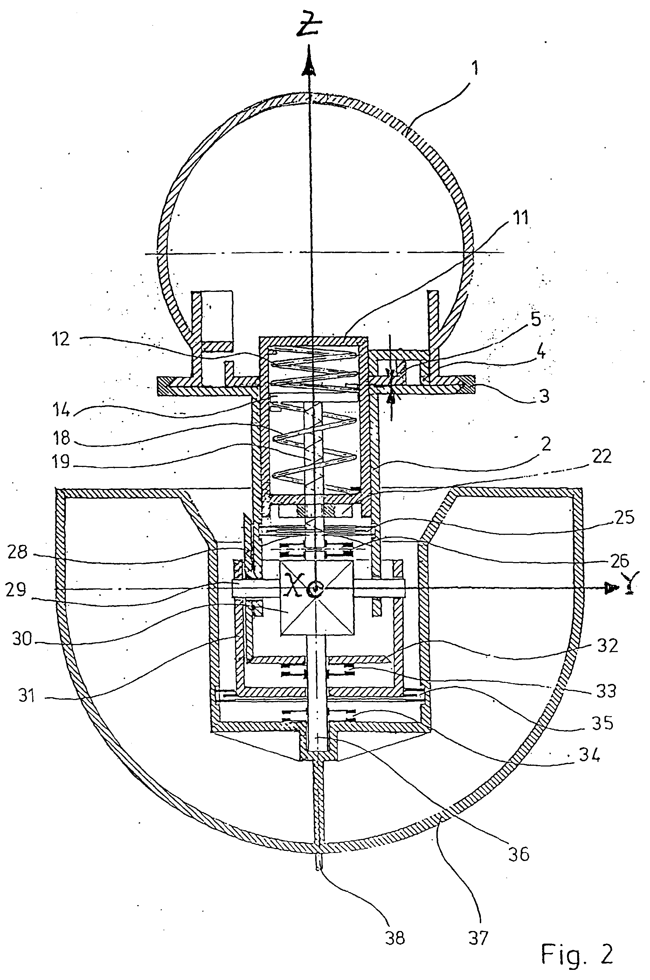

Die in den Figuren 1 und 2 dargestellte Ausstoßvorrichtung für Satelliten besteht aus einer abzusprengenden Nutzlastkapsel 1, die über eine Klemmverbindung 3 an ein zylindrisches Gehäuse 2 angeflanscht ist. Die Klemmverbindung 3 kann durch pyrotechnische Zünder gelöst werden. Je eine im Inneren des Gehäuses 2 angeordnete Druckfeder 12 und Zugfeder 18 stützen sich einerseits an einem Zug-Druck-Teller 14 und andererseits an einer Federhülse 11 ab. Die Federn 12 und 18 werden von einer Bewegungsmutter 22 gespannt, die ihrerseits über eine Spindel 19 die Federhülse 11 in axialer Richtung verfährt. Die Spindel 19 wird von einem mit einem Untersetzungsgetriebe, einem sogenannten Harmonic-Drive, ausgestatteten Elektromotor 30 über eine Schaltkupplung 26 angetrieben, sofern eine Scheibenbremse 25 gelöst ist. Der Elektromotor 30 ist über eine Drehachse 29 im Topfgehäuse 31 gelagert. Über diese Drehachse 29 können das Gehäuse 2 und die mit diesem verbundenen Komponenten um einen Elevationswinkel El verschwenkt werden. Der Antrieb erfolgt mittels einer Motorwelle 36 über eine Schaltkupplung 33 sowie über ein Kegelradpaar 32, 28. Der Azimutwinkel Az der Anordnung wird von der Motorwelle 36 über eine zweite Schaltkupplung 34 eingestellt, sofern eine zweite Scheibenbremse 35 gelöst ist. Dabei werden ein Sub-Satellit 37 und ein Topfgehäuse 31 gegeneinander verdreht und anschließend mittels der Scheibenbremse 35 miteinander gekoppelt. Der Sub-Satellit 37 sowie der Ausstossmechanismus sind über ein Seil 38 mit einer in der Zeichnung nicht dargestellten Raumstation verbunden.

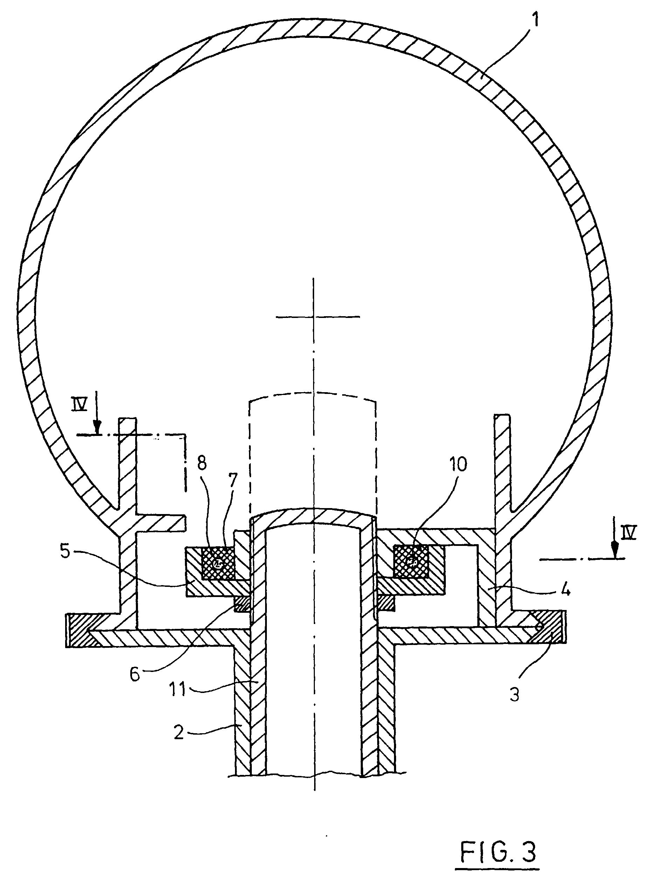

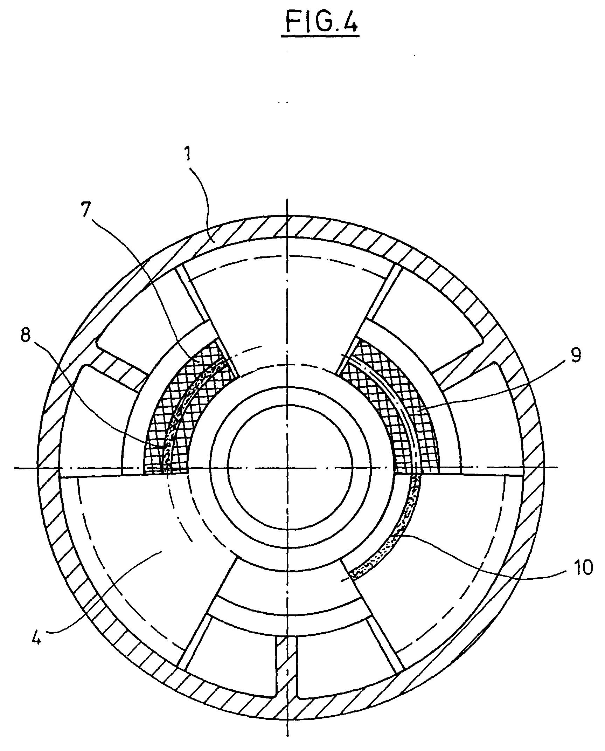

Wie in den Figuren 3 und 4 gezeigt, ist oberhalb des Gehäuses 2 ein dreiflügeliger Druckteller 4 angeordnet, der über Spulenkerne 8, 10 eines Schaltmagneten 7, 9 um seine Längsachse verdrehbar ist. Wenn die Nutzlastkapsel 1 und der Druckteller 4 miteinander gekoppelt sind, liegen die drei Flügel des Drucktellers 4 unterhalb waagerecht verlaufender Rippensegmente der Nutzlastkapsel 1. Eine Feststellmutter 6 für einen Drucktopf 5 ermöglicht eine exakte Fixierung auf der Federhülse 11, unabhängig von der gewünschten Federvorspannung.

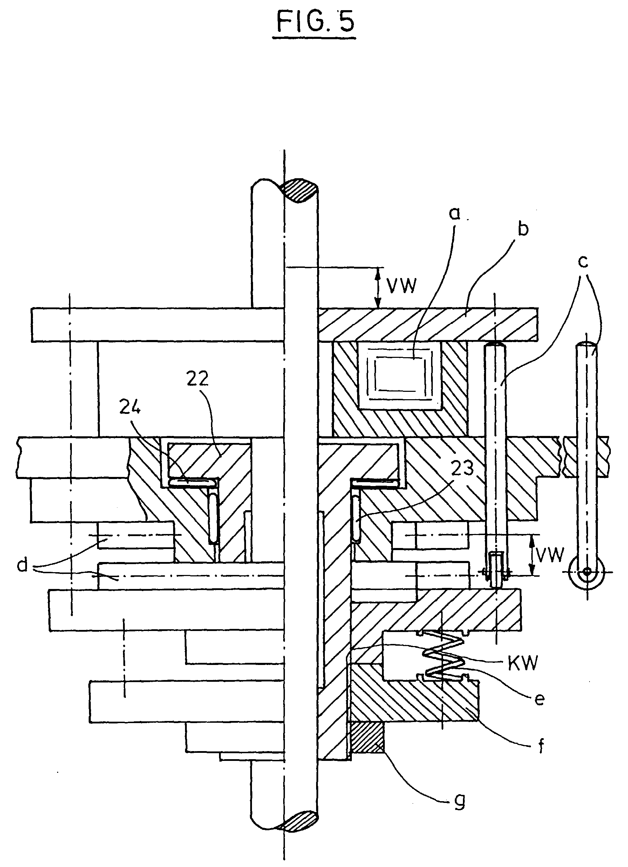

Wie aus der Schnittdarstellung gemäß Fig. 5 ersichtlich ist, vermag sich die Bewegungsmutter 22 während des Entspannungsvorganges der Federn 12, 18 um die Spindelachse 19 zu drehen, da sie über ein Radiallager 23 sowie ein Axiallager 24 mit der Federhülse 11 verbunden ist. Während dieses Vorganges drücken bei eingeschalteter Magnetwicklung a die Rollenstößel c die untere auf einem Keilwellenprofil längsverschiebliche Kupplungsscheibe gegen die Kraft der Federn e nach unten, so daß die Verzahnung d außer Eingriff kommt. Die Stößelrollen ermöglichen eine Relativbewegung zwischen beiden Kupplungshälften.

Beim Spannvorgang wird die Federhülse 11 in Richtung Z bewegt. Dieses ist nur möglich, wenn die Federhülse fest mit der Bewegungsmutter 22 verbunden ist. Erreicht wird das, indem bei ausgeschalteter Magnetwicklung a die Druckfedern e, abgestützt auf den Federteller f, die untere Kupplungsscheibe nach oben drücken. Somit kommt die Verzahnung d in Eingriff und der Kraftschluß ermöglicht den Spannvorgang. Mit VW ist hierbei der Verstellweg und mit KW das Keilwellenprofil angegeben.

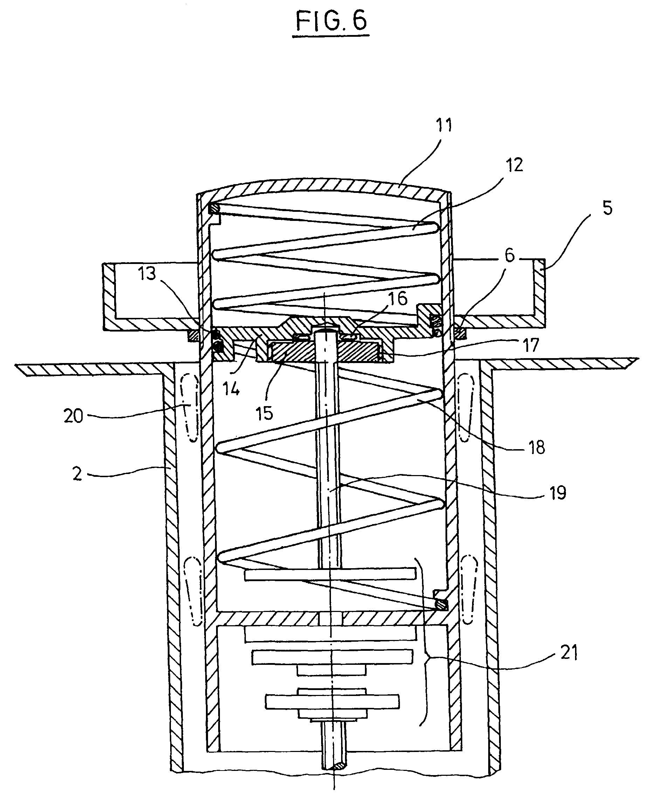

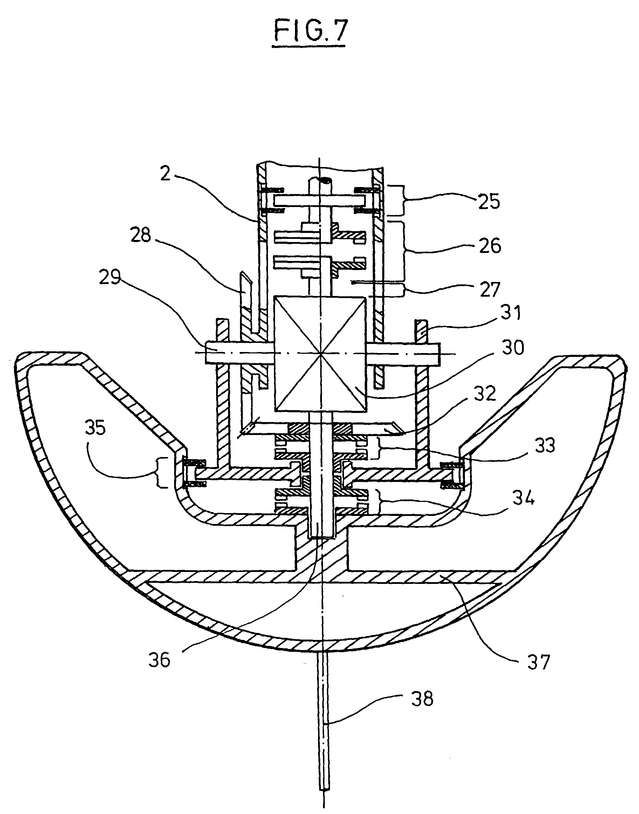

Die Spindel 19 ist während dieses Entspannungsvorganges vom Elektromotor 30 durch die Schaltkupplung 26 getrennt ist (s. Fig. 1 + 2). Sie rotiert dann entgegengesetzt zur Drehrichtung der Bewegungsmutter 22. Fig. 6 zeigt, daß dies ermöglicht wird dies durch ein weiteres Radiallager 17 sowie ein weiteres Axiallager 16, die beide zwischen einem Lagerkörper 15 und dem Zug-Druck-Teller 14 angeordnet sind. Schließlich zeigt Fig. 7, daß durch eine Code-Teilscheibe 27, die mit einem auf dem Gehäuse des Elektromotors 30 angeordneten Sensor zusammenwirkt, eine Messung des Drehwinkels der Spindel 19 und somit der Federspannung ermöglicht. Auch ist an dieser Teilscheibe der eingestellte Azimutwinkel abzulesen.

Die Wirkungsweise der vorangehend beschriebenen Anordnung ist wie folgt:
Für das Spannen der Vorrichtung vor dem Aussetzen der Nutzlast 1 muß zunächst gewährleistet sein, daß diese Nutzlast 1 mittels der Klemmverbindung 3, im Fall des hier dargestellten Ausführungsbeispiels einem sogenannten MARMAN-Spannband, fest mit dem Gehäuse 2 des Ausstoßmechanismus verbunden ist. Ein derartiger Spannvorgang kann aus konstruktiven Gründen nur dann eingeleitet werden, wenn der Schaltmagnet 7 zum Entkoppeln der Nutzlast 1 eingeschaltet ist. Weiterhin muß der Elevationswinkel 90 Grad betragen, d.h. es muß eine gestreckte Lage vorliegen, in der die Motorwelle 36 und die Spindel 19 eine Linie bilden.

Der rechtsdrehende Elektromotor 30 bewegt über die eingekuppelte Schaltkupplung 26 die Bremsscheibe 25 und die Spindel 19. Das Gewinde diese Spindel 19 weist dabei eine derart große Steigung auf, daß sichergestellt ist, daß keine Selbsthemmung eintritt, d. h., die Spindel 19 kann selbst von der Bewegungsmutter 22 in Rotation versetzt werden. Die beim Spannen von der Spindel 19 mitgenommene Bewegungsmutter 22 bewegt sich dann in Richtung der negativen Z-Achse der Anordnung (s. Fig. 1). Über die Federhülse 11 wird die Druckfeder 12 gestaucht und zugleich die Zugfeder 18 gedehnt, da beide Federn 12, 18 jeweils mit einem Ende am Zug-Druck-Teller 14 fixiert sind. Bei Erreichen der gewünschten Federspannung wird die Spindel 19 mittels der Scheibenbremse 25 relativ zum Gehäuse 2 festgesetzt.

In der Praxis kann es erforderlich sein, die Vorspannkraft nach oben oder nach unten zu variieren. Dies ist durch eine entsprechende Spindeidrehung zu erreichen. Ist der erforderliche Vorspannweg bekannt, so kann auf einfache Weise der verstellbare Drucktopf 5 so mittels des Außengewindes der Federhülse 11 eingestellt und mit der Feststellmutter 6 gekontert werden, daß die Unterkante des dreiflügeligen Drucktellers 4 am Gehäuse 2 des Ausstoßmechanismus anliegt. Damit ist die Voraussetzung dafür erfüllt, daß der dreiflügelige Druckteller 4 über den Schaltmagneten 9 in den Koppelzustand für das Ausstoßen gedreht werden kann. Die drei Flügel des Drucktellers 4 müssen dabei vor dem Ausstoßen der Nutzlast 1 exakt unterhalb der drei waagerechten Rippensegmente der Nutzlastkapsel positioniert sein.

Erst nach der erfolgten Ausrichtung der Federachse mit dem Einstellsystem kann der Entspannungsvorgang der Federn 12 und 18 ausgelöst werden. Die Scheibenbremse 25 wird dazu gelöst und die Federn 12 und 18 entspannen sich, wobei gleichzeitig die Federhülse 11 in Richtung der Federachsen bewegt wird. Die Bewegungsmutter 22 wird mitgenommen, da die nicht-selbsthemmende Spindel 19 sich wegen der großen Gewindesteigung linksdrehend bewegen kann. Die Schaltkupplung 26 muß aus zwei Gründen dabei gelöst sein: Zum einen ist dieses bei einer Variation des Elevationswinkels wegen der damit verbundenen Abknickung zwingend erforderlich, zum anderen wird auf diese Weise ein unerwünschtes Durchdrehen des Motorankers vermieden.

Bei einem Einsatz des hier beschriebenen Ausstoßmechanismus in einem Sub-Satellitensystem liegt ein wesentlicher Vorteil darin begründet , daß nach dem Ausfahren des Sub-Satelliten 37 mit der Nutzlast 1 und vor der eigentlichen Nutzlastabtrennung ein mehrmals durchführbarer Vortest möglich ist. Dazu muß, wie beim Spannen der Federn 12 und 18, der Schaltmagnet 7 zum Entkoppeln der Nutzlast 1 eingeschaltet sein. Sollten Reibungseinflüsse die Wirkung der Ausstoßvorrichtung vermindern, so kann dieses durch eine Variation des Elevations- und/oder des Azimutwinkels kompensiert werden.

Die eigentliche Ausstoßoperation erfordert einen Kontakt der Nutzlast 1 mit dem dreiflügeligen Druckteller 4, der dadurch hergestellt wird, daß zuvor der Schaltmagnet 9 für das Ankoppeln betätigt wird. Beim Entspannen der Federn 12 und 18 tritt eine Linksdrehung der Spindel einschließlich einer Hälfte der Schaltkupplung 26 auf. Gleichzeitig kommt es zu einer Rechtsdrehung der Bewegungsmutter 22. Wäre diese Bewegungsmutter 22 fest mit der Federhülse 11 verbunden, so müßte letztlich auch die Nutzlast 1 rechtsdrehend bewegt werden. Die Folge wäre eine Störung der Ausrichtung der Federachse. Dadurch aber, daß die Bewegungsmutter über die Lager 23 und 24 von der Federhülse 11 getrennt ist, wird eine solche störende Rückkopplung vermieden.

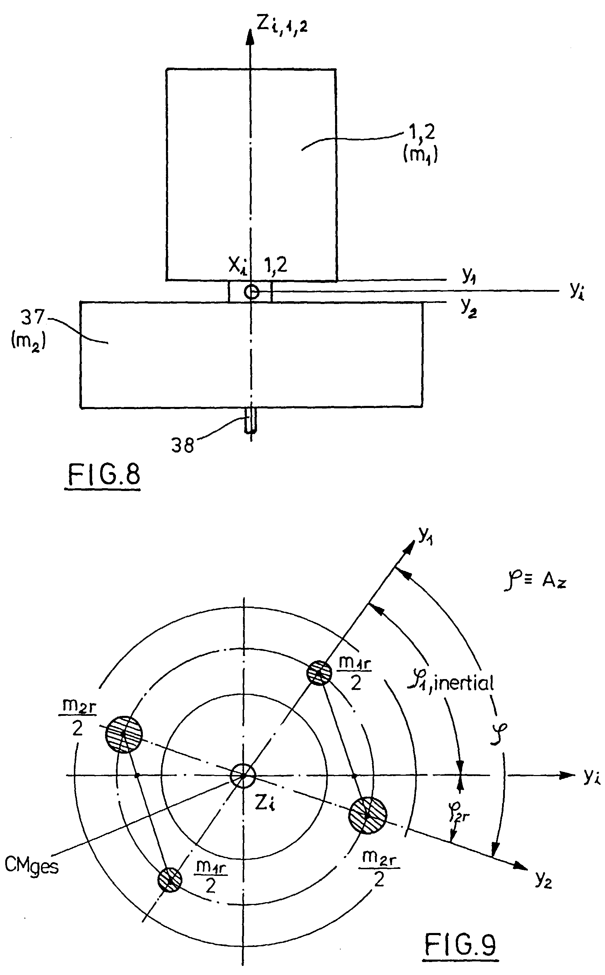

Während der Einstellung des Azimutwinkels darf die Federachse nicht abgeknickt sein, d. h., es ist ein Elevationswinkel von 90 Grad erforderlich. Auf diese weise werden Korrekturen des Azimutwinkels vereinfacht. Wenn die Schaltkupplung 33 so geschaltet ist, daß das Kegelradgetriebe 28, 32 entkoppelt ist, kann das Topfgehäuse 31 gegenüber dem Sub-Satelliten 37 verdreht werden. Weiterhin ist die Spindel 19 über die Schaltkupplung 26 entkoppelt. Zwingend erforderlich ist, daß die Schaltkupplung 34 so geschaltet ist, daß die Motorwelle 36 mit dem Sub-Satelliten verbunden und die Scheibenbremse 35 gelöst ist. Die Prinzipskizzen in den Figuren 8 und 9 verdeutlichen, daß sich zwischen dem Sub-Satelliten 37 mit der Masse m₂ und den übrigen Massen, d.h. dem Ausstoßmechanismus 2 und der Nutzlast 1 mit der Gesamtmasse m₁, ein relativer Azimutwinkel ϕ einstellt. Es tritt eine unerwünschte Rückdrehung des Sub-Satelliten auf. Der Grund liegt darin, daß das Seil 38 kein Reaktionsmoment um die Z-Achse aufzubringen vermag und der Sub-Satellit 37 daher keine stabile Lage einnimmt. Über eine einfache Berechnung läßt sich dann der erforderliche Rückdrehwinkel ϕ₂ᵣ und damit auch der inertiale Azimutwinkel ϕ_{1,inertial} ermitteln (ϕ Az).

Die Drehachse 29 zur Drehung des Kraftvektors mit dem Elevationswinkel um die Y-Achse ist fest mit dem Motorgehäuse 30 verbunden. Mit dem Gehäuse 2 des Mechanismus fest verbunden ist ein Rad 28 des Kegelradgetriebes. Die durchgehende Motorwelle ist über die Schaltkupplung 26 von der Spindel 19 entkoppelt, da eine Abknickung möglich sein muß. Über die eingekuppelte Schaltkupplung 33 ist somit das Kegelrad 32 zu drehen. Erforderlich ist weiterhin, daß die Schaltkupplung 34 vom Sub-Satelliten 37 entkoppelt ist. Die Scheibenbremse 35 muß aktiviert sein. Somit wird die Azimuteinstellung nicht verändert.

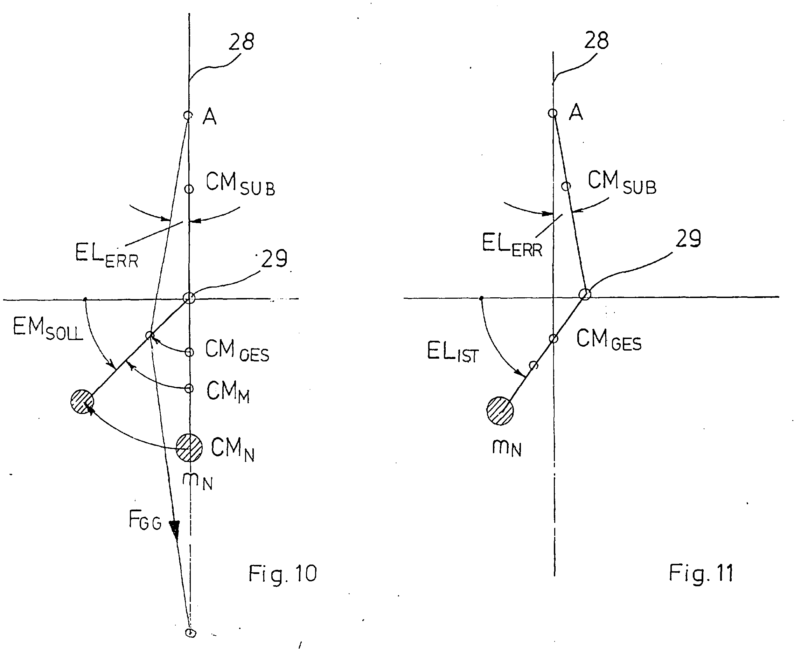

Die Figuren 10 und 11 stellen eine Erläuterung zur notwendigen Korrektur des Elevationswinkels dar. Die Lage des Gesamt-Massenmittelpunktes CM_{GES} wird durch die Massenmittelpunkte der Teilmassen des Sub-Satelliten 37, CM_{SUB} , des Ausstoßmechanismus 2, CM_{M} , und der Nutzlast 1, CM_{N} , definiert. Die Einstellung auf einen gewünschten Elevationswinkel EL_{SOLL} führt zu einer Verlagerung von CM_{GES}. Infolge der bei seilgekoppelten Satelliten auftretenden Gravity-Gradient Kraft F_{GG} (Summe aus Gravitations- und Fliehkraft) erfolgt eine radiale Ausrichtung derart, daß CM_{GES} unter den Aufhängepunkt A bewegt wird. Es tritt ein Elevations-Winkelfehler EL_{ERR} auf, der zu einer Vergrößerung der eingestellten Elevation führt. Eine vorherige Berechnung dieses Fehlerwinkels, der unabhängig vom Azimut ist, ermöglicht dann die erforderliche Winkelkorrektur, wie abschließend in Fig. 11 dargestellt.

Die hintereinander geschalteten Federn 12 und 18 liefern eine resultierende lineare Kraft-Weg-Federkennlinie. Die Federkraft ist dabei proportional dem Spindeldrehwinkel bzw. den Spindelumdrehungen. Der Spindeldrehwinkel kann mit der Code-Teilscheibe 27 über Photoelemente abgelesen werden. Somit ist die Vorspannkraft exakt zu ermitteln. Weiterhin kann unmittelbar der relative Azimutwinkel ϕᵣₑₗₐₜᵢᵥ von der Teilscheibe abgelesen werden. Der inertial gültige Winkel ergibt sich jedoch erst nach einer Korrektur. Ebenfalls ist der relative Elevationswinkel auf diese Weise unter Berücksichtigung des Übersetzungsverhältnisses des Kegelradgetriebes 28, 32 zu ermitteln. Auch hier kann der inertial gültige Winkel erst nach erfolgter Korrektur angegeben werden.

Beim Entspannen der Federn 12 und 18 würden infolge der Bewegungen der Einzelteile gegeneinander Gleitreibungskräfte auftreten. Um statt der Gleit- die viel geringere Rollreibung zu erhalten, sind bei dem hier dargestellten Ausführungsbeispiel der Erfindung für alle Dreh- und Längsbewegungen Wälzlager vorgesehen. Die Bewegungsmutter 22 ist als Kugelumlaufmutter ausgebildet. Da die Reibung letztlich unvermeidbar ist und zu einer Verminderung der Ausstoßgeschwindigkeit führt, kann eine Erhöhung der Vorspannkraft zur Kompensation dieses Effektes vorgesehen werden. Zusätzlich zur Reibung zwischen der Bewegungsmutter 22 und der Spindel 19 ist noch die Reibung des Axiallagers 16 zwischen dem Zug-Druck-Teller 14 und dem Lagerkörper 15 zu berücksichtigen (s. Fig. 6).

## Patentansprüche

1. Federbetriebener Ausstoßmechanismus für Satelliten, dadurch gekennzeichnet, daß eine Zug- und eine Druckfeder (12, 18) miteinander kombiniert und über eine nicht-selbsthemmende Spindel (19) variabel vorspannbar sind und daß die Vorspannung der Federn (12, 18) über einen mit einem Untersetzungsgetriebe versehenen Elektromotor (30) einstellbar ist.

2. Vorrichtung nach Anspruch 1, dadurch gekennzeichnet, daß alle gleitenden Komponenten bezüglich ihrer Umfangs- und Längsbewegungen in Wälzlagern geführt sind.

3. Vorrichtung nach Anspruch 1 oder 2, dadurch gekennzeichnet, daß dem Elektromotor (30) schaltbare Kupplungen (32, 34) sowie eine Scheibenbremse (33) zur Einstellung der Richtung der Ausstoßkraft zugeordnet sind.
